# EUROPEAN PATENT APPLICATION

(11) **EP 2 305 020 A2**
(43) Date of publication of application: **06.04.2011**
(21) Application number: 08846753.5
(22) Date of filing: 27.10.2008
(51) Int. Cl.: A01D 46/26

(54) **TREE SHAKER**

(30) Priority: 02.11.2007 ES 200702891
(71) Applicant: Maquinaria Garrido, S.l., 26560 Autol (ES)
(72) Inventor: GARRIDO MADORRAN, Antonio Angel, E-26560 Autol (ES)
(74) Representative: Martin Santos, Victoria Sofia
(86) International application number: PCT/ES2008/070198
(87) International publication number: WO 2009/060115

(57) **Abstract**

This invention refers to a vibrator for trees designed to dislodge the fruit from trees by shaking them through mechanical transmission of vibration to the tree trunk. The vibrator is provided with the means for use on trees of differing diameter. Vibrators for trees may include a main body and respective arms so that the tree trunk is arranged between the main body and the arms. The tree vibrator is **characterised by** the fact that it includes means for varying the distance between the arms and their rotation centre with respect to the main body. In this way, by varying the position of the arms it is possible to maintain an adequate angle of grip between the arms and the main body in the event of trees with different diameters, as it is vitally important to maintain this adequate angle in order to reduce damage to the bark of the tree which is gripped.

## Description

### OBJECT OF THE INVENTION

This invention refers to a vibrator for trees designed to dislodge the fruit from trees by shaking them through mechanical transmission of vibration to the tree trunk. The vibrator which is object of the invention is provided with the means for use on trees of differing diameter.

Vibrators for trees may include a main body and arms, so that the tree trunk is arranged between the main body and the arms. The arms are activated to open and close with a pincer movement as they rotate with respect to the main body.

The tree vibrator which is the object of the invention is characterised by the fact that it includes means for varying the distance between the arms and their rotation centre with respect to the main body. In this way, by varying the position of the arms, it is possible to maintain an adequate angle of grip between the arms and the main body in the event of trees with different diameters, as it is vitally important to maintain this adequate angle in order to reduce damage to the bark of the tree which is gripped.

### BACKGROUND TO THE INVENTION

Vibrating devices are known in the state of the art. Normally they consist of an arrangement with an eccentric mass mounted on a main structure or body which may be in contact on one of its sides with the tree and which may be provided with articulated arms which grip the tree on the main body, activated, for example, by hydraulic or pneumatic cylinders for opening and closing said arms.

A significant characteristic of this type of machinery is that it harms as little as possible the trunk of the tree on which it acts. In order to achieve this effect it is preferable for the device to grip the tree in at least three points so that the gripping pressures are reduced, thus treating the tree bark in a more delicate manner. It is also necessary for the arms to have a clamping angle with respect to the main body, sufficient to grip the tree.

Nevertheless, the difficulty arises in the case of harvesting from trees having varying trunk diameters, with the result that the clamping angle varies for each trunk diameter, and therefore for larger tree trunks the arms have a clamping angle with a greater diameter than for trees with smaller trunks, increasing the damage to the tree bark. Currently this problem is resolved by the need to have various types of arms with different opening and length measurements in order to maintain an adequate clamping angle according to the diameter of the trunk on which it is acting.

This invention resolves the aforementioned problem by means of an adequate variation of the position of the arms with respect to the main body, based on the diameter of the tree to be harvested, so that it is possible to harvest with a single set of arms even for trees with different diameter trunks.

### DESCRIPTION OF THE INVENTION

This invention refers to a vibrator for trees, the purpose of which is to dislodge fruits from trees, which may be conveniently adapted to trees with trunks of differing diameter.

The vibrator which is the object of the invention is of the pincer type, consisting of a main body and at least two arms. In operating position the tree trunk is arranged between the main body and the arms.

In order to reduce the damage caused by the clamping force of the arms on the tree trunk, it is advisable for the arms to have a specific clamping angle, thus reducing damage to the tree trunk. Clamping angle is deemed to be the angle defined between the arms and the main body. Nevertheless, based on the diameter of the tree trunk to be clamped, this angle varies and can cause damage to the tree bark.

The tree vibrator which is the object of the invention includes means for varying the distance between the arms and their rotation centre with respect to the main body. In this way, by varying this distance it is possible to maintain an adequate clamping angle between the arms and the main body without the need to use different arms based on the diameter of the trunk to be clamped.

### DESCRIPTION OF THE DRAWINGS

The present descriptive report is complemented by a set of plans illustrating a preferred embodiment of the invention, but which is in no way restrictive.

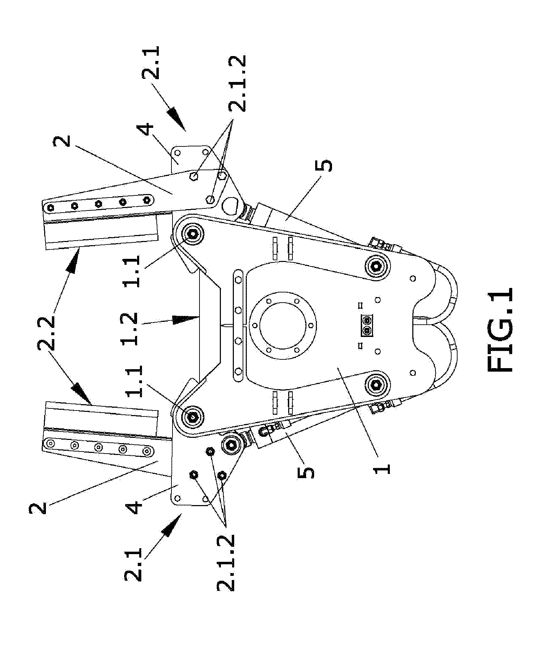

Figure 1 shows a diagram of a ground view of a preferred embodiment of the vibrator which is the object of the invention with the arms extended in an adequate position for pressure on a small tree trunk.

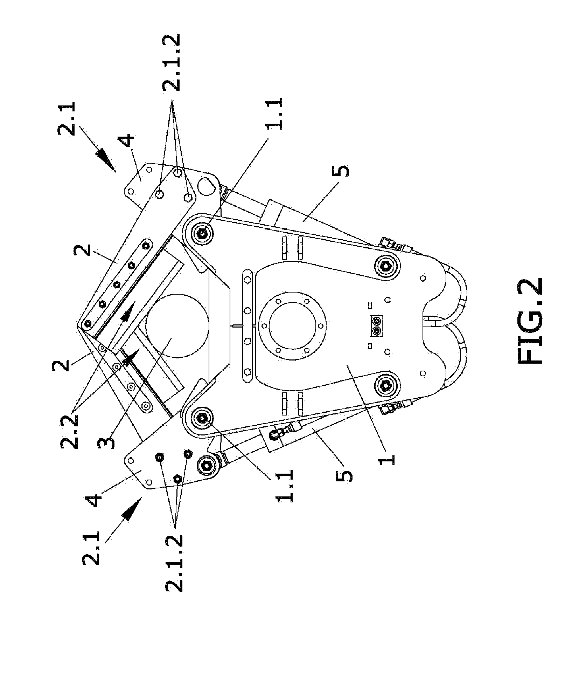

Figure 2 shows a ground view diagram of a preferred embodiment corresponding to figure 1 in which the arms are situated in a position of holding the trunk.

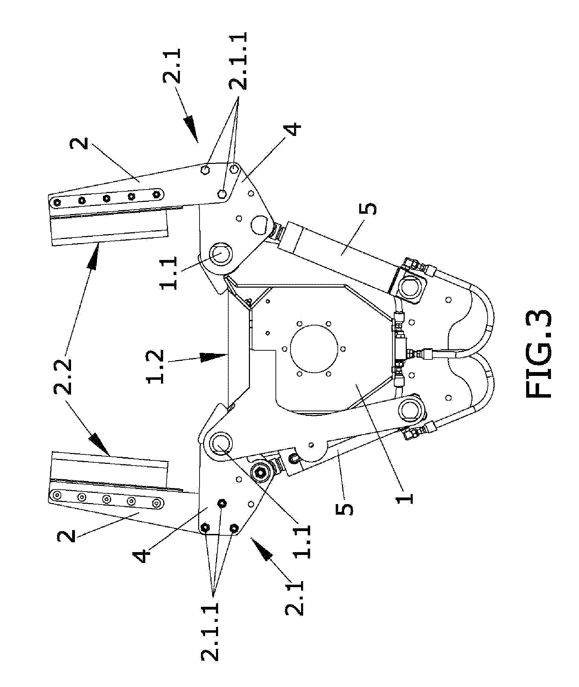

Figure 3 shows a diagram of a ground view of a preferred embodiment of the vibrator which is the object of the invention with the arms extended in an adequate position for holding a medium sized trunk.

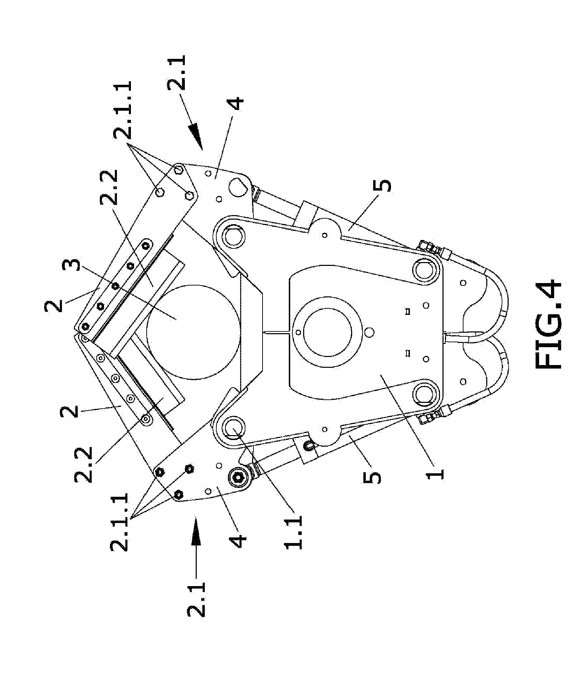

Figure 4 shows a ground view diagram of a preferred embodiment corresponding to figure 3 in which the arms are situated in a position of holding the trunk.

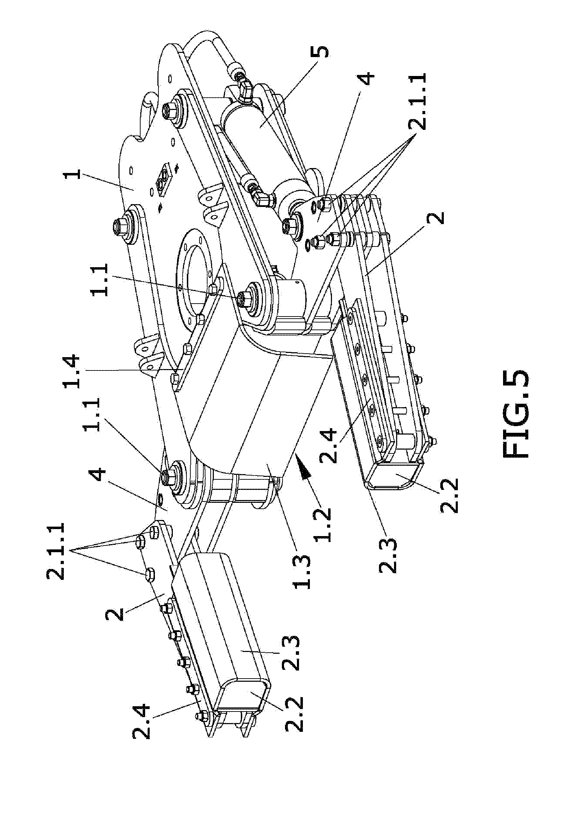

Figure 5 shows a ground view diagram in perspective of the preferred embodiment illustrated in figure 3.

### PREFERRED EMBODIMENT OF THE INVENTION

The figures attached show a preferred embodiment of the vibrator which is the object of the invention. The vibrator consists of a main body (1) and respective arms (2) with the tree trunk (3) arranged between the main body (1) and the arms (2).

The main body (1) comprises a centre of rotation (1.1) of the arms (2) with respect to the same (1).

In order to maintain an adequate clamping angle of the arms (2) with respect to the main body (1), the vibrator includes means for varying the distance between the arms (2) and the centre of rotation (1.1) of these (2) with respect to the main body (1).

In the preferred embodiment, the vibrator also includes means which enable the useful length of the arms (2) to be varied, so that the contact between the tree trunk (3) and the arms (2) is produced at approximately the same point of the arms (2) for different trunk diameter. Useful length is deemed to be the length of the arm (2) projecting from the main body (1) and which is therefore likely to grip the tree trunk (3).

These means consist of plates (4) which are situated between the arms (2) and the main body (1) so that they are arranged joined to the main body (1) thus being able to turn with respect to said body (1) as they are moved through activation (5). The connection of the arms (2) to the plates (4) is made in different predetermined positions so that based on the trunk diameter (3) the arm (2) shall be arranged in the adequate position on the plate (4).

The means of connection between the arms (2) and the plate (4) include bolted connections in the preferred embodiment shown. Other embodiments would be possible such as, for example, that the movement between positions is made by means of a rail or a mounting hole, subsequently fixing the desired position. In this way, based on the trunk (3) diameter, the arms (2) would be anchored in the appropriate position of the plate (4). In the preferred embodiment, the anchoring (2.1) includes three points.

The figures show two predefined anchoring positions (2.1) for the arms (2). A first position (2.1.1) appropriate for larger diameter trunks (3) and a second position (2.1.2) appropriate for smaller diameter trunks, as the arms (2) are closer to the centre of rotation (1.1). In order to also vary the useful length of the arms (2) the predefined position (2.1.2) closest to the rotation centre (1.1) is situated further back with respect to the farthest (2.1.1) from the rotation point, (1.1) providing less useful length of the arms (2).

Both the main body (1) and the arms (2) are provided with padded supports (1.2, 2.2) for the purpose of reducing damage to the tree trunks (3).

Similarly, the padded supports (1.2, 2.2) are covered with flaps (1.3, 2.3) which are harder than the padded supports (1.2, 2.2) contributing in this way to reducing damage to the tree bark (3) having a greater friction coefficient than the supports (1.2, 2.2). In order to facilitate the assembly and dismantling of the flaps (1.3, 2.3) their ends are situated under the bolted plates (1.4, 2.4).

## Claims

1. Vibrator for trees, which includes a main body (1) and respective arms (2) so that the tree trunk (3) is arranged between the main body (1) and the arms (2) with the arms (2) provided with a centre of rotation (1.1) with respect to the main body (1), **characterised in that** it comprises means for varying the distance between the arms (2) and the centre of rotation (1.1) of these (2) with respect to the main body (1).

2. Vibrator for trees, according to claim 1, **characterised in that** it is provided with means for varying the useful length of the arms (2).

3. Vibrator for trees, according to claim 2, **characterised in that** the means for varying the distance between arms (2) and the centre of rotation (1.1) and of variation of their length include respective plates (4) which are situated between the arms (2) and the main body (1) in such a way that they are arranged joined thereto (1) thus being able to rotate in respect to the main body (1) and including means for connection to the arms (2) in different predetermined positions of the plate (4).

4. Vibrator for trees, according to claim 3, **characterised in that** the means of connection between the arms (2) and the plate (4) comprise bolted connections.

5. Vibrator for trees, according to claim 4, **characterised in that** each connection between arms (2) and plates (4) includes three anchoring points (2.1).

6. Vibrator for trees, according to claim 3, **characterised in that** the means of connection between the arms (2) and the plate (4) comprise guides or mounting holes.

7. Vibrator for trees, according to claim 3, **characterised in that** it includes two pre-defined positions (2.1.1., 2.1.2) of the arms (2).

8. Vibrator for trees, according to claim 7, **characterised in that** the pre-defined position (2.1.2) closer to the rotation point (1.1) is situated set back with respect to the farthest (2.1.1) from the point of rotation (1.1) providing less useful length of the arms (2).

9. Vibrator for trees, according to claim 1, **characterised in that** the main body (1) and the arms (2) are provided with padded means (1.2, 2.2) on the support points of the trunk (3).

10. Vibrator for trees, according to claim 9, **characterised in that** the padded supports (1.2, 2.2) are covered with flaps (1.3, 2.3).

11. Vibrator for trees, according to claim 10, **characterised in that** the flaps (1.3, 2.3) are harder than the padded supports (1.2, 2.2).

12. Vibrator for trees, according to claim 10, **characterised in that** the ends of the flaps (1.3, 2.3) are situated under bolted plates (1.4, 2.4).
